# EUROPEAN PATENT SPECIFICATION

(11) **EP 3 642 568 B1**
(45) Date of publication and mention of the grant of the patent: **01.12.2021**
(21) Application number: 18740040.3
(22) Date of filing: 20.06.2018
(51) Int. Cl.: G01D 11/24, G01L 19/00, G01F 15/18

(54) **QUICK CONNECT SENSOR ASSEMBLY**
SCHNELLKUPPLUNG FÜR SENSORANORDNUNG
RACCORD RAPIDE POUR ENSEMBLE CAPTEUR

(30) Priority: 20.06.2017 US 201762522141 P
(43) Date of publication of application: 29.04.2020
(73) Proprietor: Sogefi Air & Cooling USA, Inc., Rochester Hills, Michigan 48309 (US)
(72) Inventor: KERN, Tom, Rochester Hills Michigan 48309 (US); SANET, Fabien, 78990 Elancourt (FR)
(74) Representative: Hohgardt, Martin
(86) International application number: PCT/US2018/038544
(87) International publication number: WO 2018/237033

(56) References cited:
- WO-A2-2007/106749
- US-A1- 2007 074 591
- US-A1- 2013 147 184
- US-B1- 6 203 366

## Description

### TECHNICAL FIELD

The present disclosure relates generally toward an improved quick-connect sensor assembly adapted to be received within a port defined by a component housing.

### BACKGROUND

Production sensors are presently designed for mating to metallic, die cast counterparts and require threaded metallic coupling. These couplings are generally made of brass or stainless steel for providing corrosion resistance. US2013/147184 discloses such coupling for sensor assembly. Special accommodations are required when the sensors are installed on plastic components that require die inserts necessary to replicate threaded composite or plastic interface and to provide necessary sealing. When mating plastic components to metallic components, variance in thermal expansion of two different materials are known to result in stress failures and sealing that is insufficient to prevent fluid leaking through the interface between the two materials. This has generally been addressed by providing a high number of threads and over-tightening the sensor to the housing. To address the interface, high costs are generated by providing a metallic threaded insert to either the counterpart or the sensor assembly. In addition, when providing a metallic threaded insert for a plastic sensor, manufacturing costs exceed what is considered commercially viable in a competitive marketplace.

Therefore, it would be desirable to develop a sensor assembly capable of quickly mating to a component without undue complexity, particularly when a metallic to plastic interface is required.

### SUMMARY

An improved quick-connect sensor assembly adapted to be received within a port defined by a component housing is provided as defined in claim 1.

In one embodiment, the locking housing includes a sidewall defining opposing slots. The slots receive a corresponding flange extending from the port, thereby preventing rotational movement of the locking housing. The coupling further includes a preventer integrally attached thereto and disposed in abutting engagement with the component housing when the coupling is rotated into locking engagement with the port. The locking housing includes a housing stop and the preventer includes a coupling stop, wherein the housing stop is disposed in abutting engagement with the coupling stop to prevent rotational movement of the coupling relative to the locking housing.

In another embodiment, the locking housing define a locking housing catch that engages a port catch by snap-fit to provide interlocking engagement between the locking housing and the component housing. The locking housing catch may be disposed upon distal ends of locking arms separated by the opposing slots and the locking arms may be flexible for releasing the housing catch from the port catch.

In a further embodiment, the locking member provides interlocking engagement with the rib extending from the sidewall with a quarter-turn of the coupling relative to the component housing. The locking member includes a helicoidal shape for rotational interlocking the coupling to the port. The coupling defines a seat for receiving a seal to fluidly seal the coupling to the port when the coupling is received by the port. The coupling defines a channel providing fluid access to the sensor element.

A system is also provided as defined in claim 12.

The quick-connect sensor assembly eliminates complex threads and inserts while providing a quick installation mechanism requiring only a quarter-rotational turn of the coupling relative to the component housing. The quick releasability of the coupling from the port, and the innovative manner in which the locking housing prevents inadvertent rotation of the coupling relative to the port, prevents the inadvertent removal of the sensor assembly, and solves problems previously associated with sensor assemblies in an efficient, low-cost manner.

These and other features and advantages of the present invention will become apparent from the following description of the invention, when viewed in accordance with the accompanying drawings and appended claims.

### BRIEF DESCRIPTION OF THE DRAWINGS

Figure 1 shows a perspective view of the quick-connect sensor assembly of the present invention installed within the component housing;
Figure 2 shows a perspective, exploded view of the quick-connect sensor assembly;
Figure 3 shows a side sectional view of a portion of the quick-connect sensor assembly including the coupling and the sensor element;
Figures 4A and 4B show side sectional views of the quick-connect sensor assembly during (A) and after (B) installation within the component housing; and
Figures 5A and 5B show the locking housing before (A) and after (B) being secured over the preventer by snap-fit.

### DETAILED DESCRIPTION

Referring to the Figures, a sensor assembly in accordance with one embodiment is illustrated and generally designated 10. The sensor assembly 10 is adapted to be received within a port 12 defined by a component housing 14 (collectively a "system"), the port 12 having an external catch 16 and having an interior sidewall 18 defining a rib 20. The sensor assembly 10 includes a sensor element 22, a coupling 24, and a locking housing 26. Each such feature of the sensor assembly 10 is discussed below.

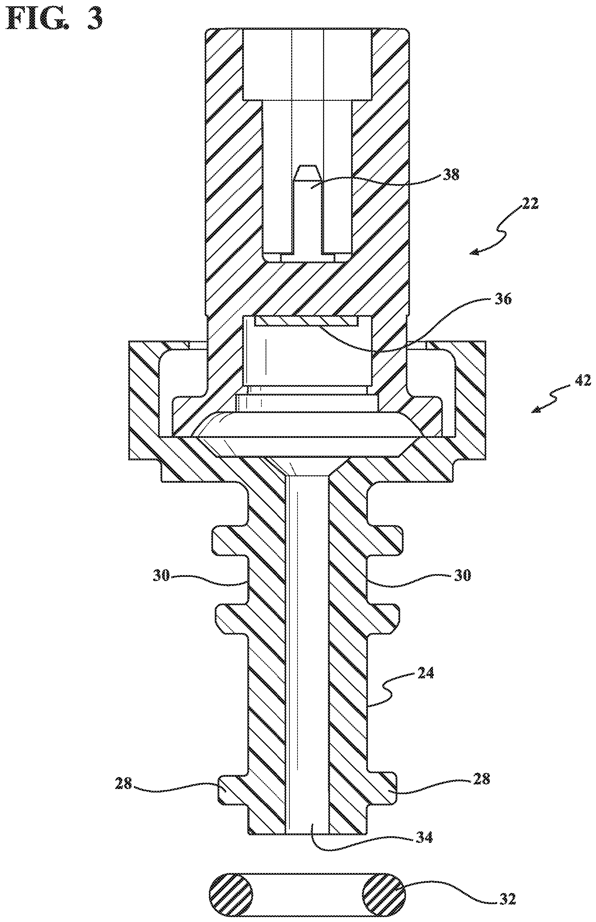

The sensor element 22 is adapted to directly or indirectly measure a fluid within the component housing 14. The sensor element 22 includes an internal sensor 36, optionally a pressure sensor, temperature sensor, water sensor, fluid level sensor, or compositional sensor. The sensor 36 includes a connector 38 to which a controller or other appropriate electronic devices may be connected. Though only one sensor 36 is shown in Figure 3, the sensor element 22 can include a plurality of sensors 36.

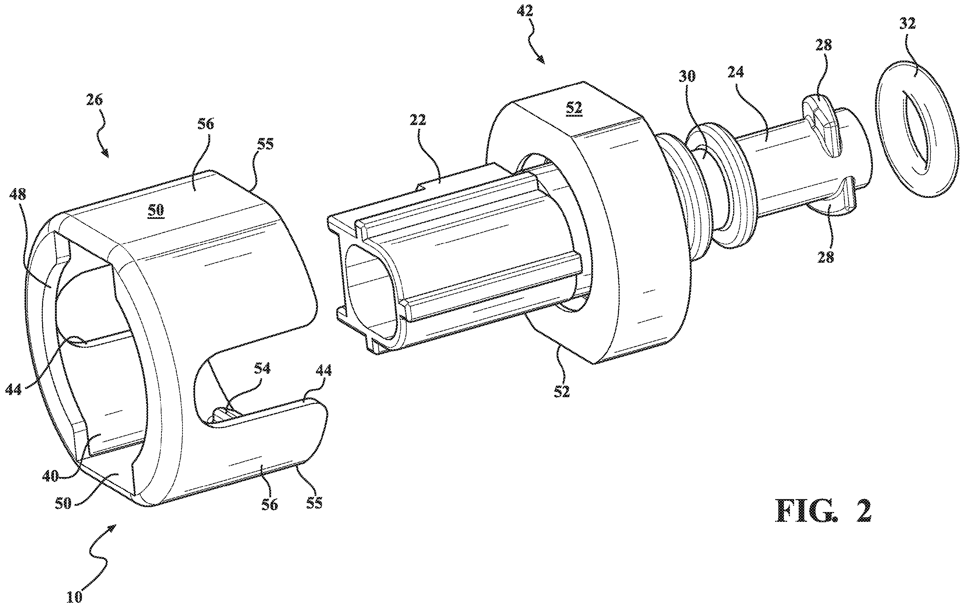

The coupling 24 is generally adapted to secure the sensor assembly 10 to the interior of the port 12 and is rigidly connected to the sensor element 22. The coupling 24 is cylindrical, as shown in Figure 2, but can include other cross-sectional shapes in other embodiments. The coupling 24 is configured to be received within the port 12 defined by the component housing 14. In various embodiments, the component housing 14 defines a space within which fluid is disposed, and the port 12 is in fluid communication with the fluid disposed within such space. Anything inserted within the port 12 is therefore in fluid communication with the fluid disposed within the space defined by the component housing 14.

The coupling 24 includes a locking member 28 extending radially outward therefrom. The locking member 28 can rotationally interlock the coupling 24 to the port 12 by mechanical engagement with the rib 20. For example, the locking member 28 can include a helical shape 28 that rotatably engage the rib 20, and the rib 20 may include two radially opposed flanges 20 projecting from the sidewall 18 of the port 12. Further by example, the locking member 28 may include radially opposed flanges 28 projecting from a surface of the coupling 24 that engage with the rib 20, where the rib 20 is helical in shape. Still further by example, both the locking member 28 and the rib 20 may be helical in shape. The rib 20 may include a single or a plurality of flanges or helical members and, similarly, the locking member 28 may include a single or a plurality of flanges or helical members. Optionally, the rib 20 or the locking member 28, or both, include cooperable helicoidal members. In several embodiments, the locking member 28 establishes an interlocking engagement with the rib 20 by a fraction of a turn of the coupling 24 relative to the component housing 14 and relative to the port 12. Optionally, the locking member 28 establishes an interlocking engagement with the rib 20 by a half-turn or less, and further optionally by a quarter-turn or less. When the locking member 28 is interlockably engaged with the rib 20, the coupling 24 is thereby locked (alternatively, "secured", "installed," or "engaged") in an inserted position within the port 12.

The coupling 24 defines a seat 30 for receiving a seal 32. The seal is an O-ring 32 in the illustrated embodiment, optionally manufactured of an elastomeric polymer, for example rubber. During installation of the sensor assembly 10 within the port 12, the seal 32 is disposed within the seat 30 and establishes a fluid-tight seal between the sidewall 18 of the port 12 and the coupling 24. The use of the seal 32 has the advantage of eliminating any need for a plurality of threads or other special configurations of threads to seal the coupling 24 to the port 12. The seal 32 provides the advantage of making the depth of insertion of the coupling 24 substantially irrelevant to the establishment of a fluid-tight seal between the sidewall 18 and the coupling 24 to effectively prevent fluid from unintentionally exiting from the port 12.

As shown in Figure 3, the coupling 24 includes a channel 34 to allow fluid communication between the fluid disposed within the space defined by the component housing 14 and the sensor element 22. The channel 34 may have any of a variety of shapes and configurations, optionally a substantially linear cylindrical opening running along an axis of the coupling 24 and generally centered upon the axis of the coupling 24. The sensor assembly 10 includes a locking housing 26 defining a sleeve 40 adapted to extend over the sensor element 22 and, optionally, a preventer 42, described further below. When the sleeve 40 of the locking housing 26 is extended over the sensor element 22 and the preventer 42, the locking housing 26 prevents rotational movement of the coupling 24 relative to the port 12 and relative to the component housing 14 when the coupling 24 is interlocked with the port 12. The locking housing 26 thereby prevents disengagement of the coupling 24 from the port 12.

The locking housing 26 includes radially opposed slots 44 each configured to receive a flange 46 extending from the component housing 14. When the sleeve 40 of the locking housing 26 is extended over the sensor element 22 while the sensor element 22 is lockably engaged within the port 12, the flanges 46 are by the same action inserted within the slots 44. The disposition of the flanges 46 within the slots 44 serves to prevent rotation of the locking housing 26 relative to the component housing 14. The locking housing 26 includes a locking aperture 48 through which the sensor element 22 may be inserted during installation of the sensor assembly 10 within a component housing 14.

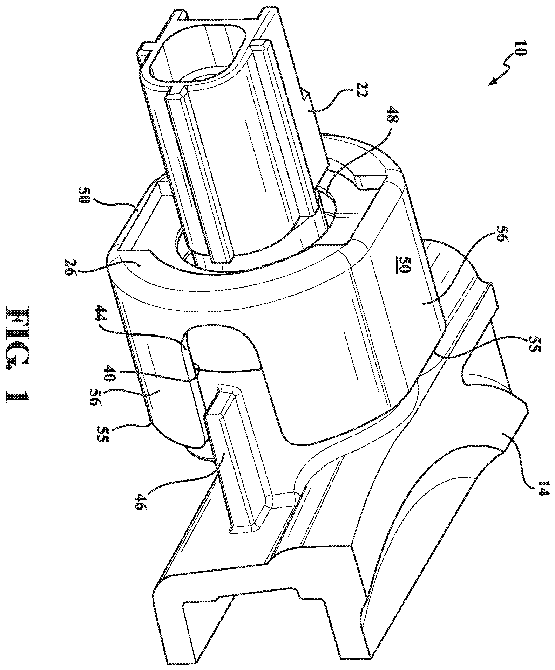

Referring again to Figure 1, the coupling 24 includes a preventer 42 integrally attached thereto and disposed to be in abutting engagement with the component housing 14 when the coupling 24 is rotated into interlocking engagement with the port 12, as described above. The preventer 42 serves to prevent the sensor assembly 10 from being inserted too far within the port 12 and further provides an opposing force necessary for the coupling 24 to properly establish a secure rotational interlocking within the port 12 mediated by the physical interaction of the rib 20 with the locking member 28, as described above. An internal diameter of an opening defined by the sleeve 40 is generally equivalent to an outer diameter defined by the preventer 42.

The locking housing 26 includes a locking housing stop 50 and the preventer 42 includes a coupling stop 52. These surfaces are generally complimentary to one another. Optionally, the locking housing stop 50 includes a generally planar region of a radially inward-directed surface defined by the sleeve 40 of the locking housing 26 extending in an axial direction, and the coupling stop 52 includes a generally planar region of a radially outward-directed surface of the preventer 42 extending in an axial direction. The locking housing stop 50 is disposed to establish an abutting engagement with the coupling stop 52 to thereby prevent rotational movement of the coupling 24 relative to the locking housing 26. Therefore, the flanges 46, opposing slots 44, coupling stop 52, and locking housing stop 50 function cooperatively to prevent rotation of the coupling 24 relative to the port 12. This prevention of rotation functions to prohibit rotational disengagement of the coupling 24 from the port 12, thereby ensuring that a secure fluid seal remains established by the seal 32 between the coupling 24 and the sidewall 18 of the port 12 and ensuring, therefore, that the sensor assembly 10 does not become detached from the component housing 14.

The locking housing 26 includes a locking housing catch 54 configured to engage the port catch 16 by snap-fit to provide interlocking engagement between the locking housing 26 and the component housing 14. The locking housing catch 54 includes flanges 54 extending into the sleeve 40 from distal ends 55 of locking arms 56. The locking arms 56 are defined by and separated from one another by the opposing slots 44. The port catch 16 includes flanges 16 extending radially outward from a cylindrical region of the component housing 14 partially defining the port 12. When the sensor assembly 10 is installed within the port 12 the locking housing catch 54 is lockably secured over the sensor element 22 through snap-fit engagement mediated by the locking housing catch 54 and the port catch 16, as described further below. This snap-fit engagement is made possible in part by the flexibility imparted to the locking arms 56 by means of the opposing slots 44 and the material composition of the locking housing 26 and locking arms 56. This flexibility of the locking arms 56 enables the locking housing catch 54 to be slipped over the port catch 16 with the application of force to thereby establish a snap-fit. This snap-fit engagement prevents the locking housing 26 from being unintentionally removed from engagement with the component housing 14, which would have the consequence of thereby allowing rotation of the sensor assembly 10 and its potential accidental removal from the component housing 14 as well. The flexibility of the locking arms 56 enables the removal of the locking housing 26 from the component housing 14 by simply pulling the locking arms 56 away from one another (i.e., "outward") to allow the locking housing catch 54 to bypass the port catch 16 and subsequently pulling the locking housing 26 away from the component housing 14.

The locking housing catch 54 is so configured as to also engage with the preventer 42 by snap-fit so that, prior to installation and after removal of the sensor assembly 10, the locking housing 26 may become and remain securely associated by snap-fit with the sensor assembly 10. This has the advantage of simplifying installation of the sensor assembly 10 because the sensor assembly 10 can be provided to a user as a one-piece unit and, further, can reduce the risk of one or the other of the locking housing 26 or the coupling 24 and sensor element 22 being misplaced or dissociated from the other, which is a situation that would render the remaining element of the sensor assembly 10 at least partially non-functional.

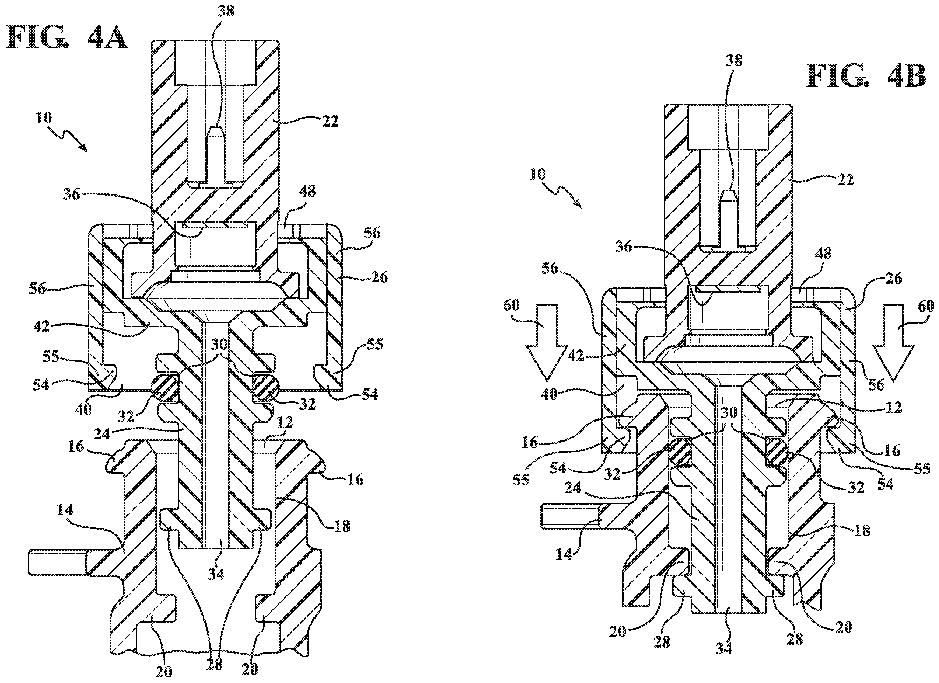

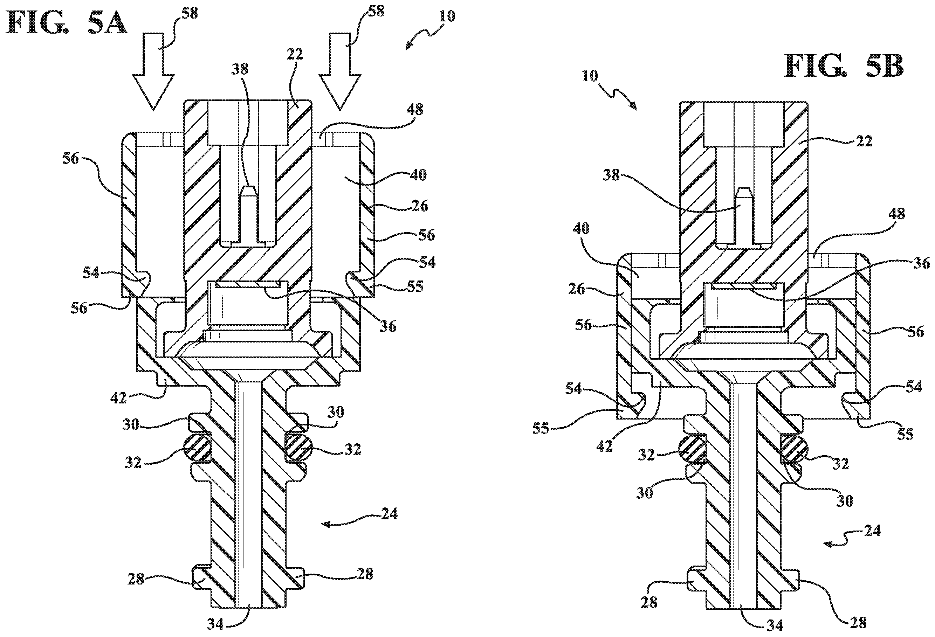

A method of installing the sensor assembly 10 within a component housing 14 can include the following actions. Acquiring the above described sensor assembly 10. Inserting the coupling 24 into the port 12 defined by the component housing 14 until the locking member 28 abuts the rib 20. Rotating the coupling 24 by a fraction of a turn, optionally about 45 degrees, relative to the component housing 14 and port 12 such that the locking member 28 engages with the rib 20. Optionally, positioning the locking member 28 below the rib 20 (as shown in Fig. 4B) by a 45 degree rotation. Aligning the sleeve 40 defined by the locking housing 26 over the preventer 42 such that the locking housing stop 50 aligns with the coupling stop 52 and the sensor element 22 aligns with the locking aperture 48, as generally shown in Fig. 1. Aligning the opposing slots 44 over the flanges 46, as generally shown in Fig. 1. Pushing the locking housing 26 in the direction of the arrows 58 shown in Fig. 5A causing the locking housing catch 54 to impact the preventer 42 causing the locking arms 56 to deflect outward. Pushing the locking housing 26 in the direction of the arrows 58 shown in Fig. 5A until the locking housing catch 54 moves past the preventer 42 causing the locking housing 26 to become secured over the preventer 42 by snap-fit to assume the configuration shown in Figure 5B. Pushing the locking housing 26 in the direction of the arrows 60 shown in Fig. 4B until the locking housing catch 54 contacts the port catch 16 causing the locking arms 56 to deflect outward. Pushing the locking housing 26 until the locking housing catch 54 bypasses the port catch 16, thereby causing the locking housing catch 54 to secure the locking housing 26 over the port catch 16 by snap-fit and also causing the flanges 46 to be disposed within the opposing slots 44 to prevent rotation of the locking housing 26 relative to the component housing 14 and, further, to prevent the sensor assembly 10 from being rotatably disengaged and withdrawn from the port 12 inadvertently.

A method of removing the sensor assembly 10 from a component housing 14 includes the following actions. Manually deflecting the locking arms 56 outward to a sufficient extent that the locking housing catch 54 may bypass the port catch 16. Moving the locking housing 26 in a direction opposite the arrows 60 shown in Fig. 4B while the locking arms 56 are deflected outward until the locking housing catch 54 bypasses the port catch 16. Rotating the coupling 24 in an appropriate direction such that the locking member 28 disengages from the rib 20, allowing the coupling 24 to be removed from the port 12. Pulling the coupling 24 out of the port 12. Optionally, manually deflecting the locking arms 56 outward to a sufficient extent that the locking housing catch 54 may bypass the preventer 42. Optionally, moving the locking housing 26 in a direction opposite the arrows 58 shown in Fig. 5A while the locking arms 56 are deflected outward until the locking housing catch 54 bypasses the preventer 42.

The various elements of the components of the embodiments of the sensor assembly 10 described above, e.g. the coupling 24, the sensor element 22, and the locking housing 26, may be manufactured of the same or different material(s), such as any one or more of the materials described below. Typically, the sensor assembly 10 is monolithic in construction and homogenous in composition. However, the sensor assembly 10 may comprise multiple components joined together. Moreover, each component may itself comprise a combination of different materials, and thus may not comprise a homogeneous composition throughout. In general, materials suitable for use in or as the sensor assembly 10 (e.g. the coupling 24, the sensor element 22, and the locking housing 26) include metals (e.g. steels, aluminums, alloys, etc.), resins (e.g. thermoset and/or thermoplastic resins), and combinations thereof. However, myriad materials may be used to manufacture the elements of the sensor assembly 10, each typically selected as a function of availability, cost, performance/end use applications etc. For example, the material composition of the sensor assembly 10 may be selected such that the material composition may be compatible with a particular fluid composition relevant to a particular application. Moreover, metals, metal alloys, and resins are not exhaustive of suitable materials that may be used.

The above description relates to general and specific embodiments of the disclosure. However, various alterations and changes can be made without departing from the scope of the appended claims, which are to be interpreted in accordance with the principles of patent law including the doctrine of equivalents. As such, this disclosure is presented for illustrative purposes and should not be interpreted as an exhaustive description of all embodiments of the disclosure or to limit the scope of the claims to the specific elements illustrated or described in connection with these embodiments. Any reference to elements in the singular, for example, using the articles "a," "an," "the," or "said," is not to be construed as limiting the element to the singular. The word "diameter" is used to refer generally to that dimension describing the distance spanned by a line connecting a center of a cross-section of an object to the outer perimeter of the object such that two objects sharing a common "diameter" generally at least partially share a common cross-sectional shape.

## Claims

1. A sensor assembly (10) adapted to be received within a port (12) defined by a component housing (14), wherein the component housing (14) includes an exterior port catch (16), the port including a rib (20) extending radially inwardly therefrom, the sensor assembly comprising:
a sensor element (22) joined to a coupling (24), the coupling including a longitudinal member and a locking member (28) extending radially therefrom, the locking member being configured to rotationally interlock to the rib to prevent withdrawal of the coupling; and
a locking housing (26) defining a sleeve (40) adapted to extend over the sensor element, wherein the sleeve includes opposing lateral slots (44), is configured to engage the exterior port catch, and is adapted to prevent rotational movement and axial movement of the coupling relative to the port when the locking member is rotationally interlocked with the rib to prevent disengagement of the coupling from the port.

2. The sensor assembly of claim 1 wherein the locking member includes an annular flange to rotationally interlock the coupling to the rib.

3. The sensor assembly of claim 1 wherein the locking member includes a partial thread to rotationally interlock the coupling to the rib.

4. The sensor assembly of claim 1 wherein the coupling defines a channel (34) to provide fluid access to the sensor element.

5. The sensor assembly of claim 1 wherein the opposing lateral slots receive a flange (46) extending from the component housing to prevent rotational movement of the locking housing.

6. The sensor assembly of claim 1 wherein the coupling includes a preventer (42) integrally attached thereto and disposed in abutting engagement with the locking housing.

7. The sensor assembly of claim 1 wherein the locking housing includes a locking housing catch (54) and the locking housing catch is configured to engage the exterior port catch by snap-fit.

8. The sensor assembly of claim 1, wherein the sensor element includes a fluid sensor and is in electrical communication with a controller.

9. The sensor assembly of claim 1 wherein the coupling defines a seat (30) for receiving a seal (32).

10. The sensor assembly of claim 9, further including an O-ring as seal within the seat.

11. The sensor assembly according to any of claims 1 to 10, wherein the port includes an interior sidewall defining a rib, the sensor assembly further comprising:
a coupling, wherein the coupling is interconnected with the sensor element and is configured to be received by the port.

12. A system comprising:
a component housing (14) defining a port (12) therein, wherein the port includes an interior sidewall defining a rib (20); and
a sensor assembly according to any of claims 1 to 11.

## Patentansprüche

1. Eine Sensoranordnung (10), die geeignet ist, in einer Öffnung (12) aufgenommen zu werden, die durch ein Komponentengehäuse (14) definiert ist, wobei das Komponentengehäuse (14) eine äußere Öffnungsverriegelung (16) enthält, wobei die Öffnung eine Rippe (20) enthält, die sich radial nach innen davon erstreckt, wobei die Sensoranordnung umfasst:
ein Sensorelement (22), das mit einer Kupplung (24) verbunden ist, wobei die Kupplung ein Längselement und ein sich radial davon erstreckendes Verriegelungselement (28) umfasst, wobei das Verriegelungselement so konfiguriert ist, dass es drehbar mit der Rippe verriegelt, um ein Herausziehen der Kupplung zu verhindern; und
ein Verriegelungsgehäuse (26), das eine Hülse (40) definiert, die so angepasst ist, dass sie sich über das Sensorelement erstreckt, wobei die Hülse gegenüberliegende seitliche Schlitze (44) umfasst, so konfiguriert ist, dass sie in die äußere Anschlussverriegelung eingreift, und so angepasst ist, dass sie eine Drehbewegung und eine axiale Bewegung der Kupplung relativ zum Anschluss verhindert, wenn das Verriegelungselement drehend mit der Rippe verriegelt ist, um ein Lösen der Kupplung vom Anschluss zu verhindern.

2. Die Sensoranordnung nach Anspruch 1, wobei das Verriegelungselement einen ringförmigen Flansch aufweist, um die Kupplung mit der Rippe drehbar zu verriegeln.

3. Die Sensoranordnung nach Anspruch 1, wobei das Verriegelungselement ein Teilgewinde aufweist, um die Kupplung mit der Rippe drehbar zu verriegeln.

4. Die Sensoranordnung nach Anspruch 1, wobei die Kupplung einen Kanal (34) definiert, um einen Fluidzugang zum Sensorelement zu ermöglichen.

5. Die Sensoranordnung nach Anspruch 1, wobei die gegenüberliegenden seitlichen Schlitze einen Flansch (46) aufnehmen, der sich von dem Komponentengehäuse erstreckt, um eine Drehbewegung des Verriegelungsgehäuses zu verhindern.

6. Die Sensoranordnung nach Anspruch 1, wobei die Kupplung eine einstückig an ihr befestigte und in anliegendem Eingriff mit dem Verriegelungsgehäuse angeordnete Sperrvorrichtung (42) umfasst.

7. Die Sensoranordnung nach Anspruch 1, wobei das Verriegelungsgehäuse eine Verriegelungsgehäuseverriegelung (54) umfasst und die Verriegelungsgehäuseverriegelung so konfiguriert ist, dass sie mit der äußeren Anschlussverriegelung durch Schnappverschluss in Eingriff kommt.

8. Die Sensoranordnung nach Anspruch 1, wobei das Sensorelement einen Flüssigkeitssensor enthält und in elektrischer Verbindung mit einer Steuerung steht.

9. Die Sensoranordnung nach Anspruch 1, wobei die Kupplung einen Sitz (30) zur Aufnahme einer Dichtung (32) definiert.

10. Die Sensoranordnung nach Anspruch 9 enthält außerdem einen O-Ring als Dichtung innerhalb des Sitzes.

11. Die Sensoranordnung nach einem der Ansprüche 1 bis 10, wobei die Öffnung eine innere Seitenwand aufweist, die eine Rippe definiert, wobei die Sensoranordnung weiterhin umfasst:
eine Kupplung, wobei die Kupplung mit dem Sensorelement verbunden ist und so konfiguriert ist, dass sie von dem Anschluss aufgenommen werden kann.

12. Ein System, aufweisend:
ein Komponentengehäuse (14), das eine Öffnung (12) darin definiert, wobei die Öffnung eine innere Seitenwand aufweist, die eine Rippe (20) definiert; und
eine Sensoranordnung nach einem der Ansprüche 1 bis 11.

## Revendications

1. Un bloc de capteur (10) apte à être logé à l'intérieur d'un orifice (12) défini par un boîtier de composant (14), le boîtier de composant (14) comprenant un cran d'orifice extérieur (16), le cran comprenant une nervure (20) s'étendant radialement vers l'intérieur depuis ce dernier, le bloc de capteur comprenant :
un élément de capteur (22) relié à un coupleur (24), le coupleur comprenant un organe longitudinal et un organe de verrouillage (28) s'étendant radialement depuis ce dernier, l'organe de verrouillage étant configuré pour se verrouiller mutuellement en rotation à la nervure pour empêcher un retrait du coupleur ; et
un boîtier de verrouillage (26) définissant un manchon (40) apte à s'étendre au-dessus de l'élément de capteur, le manchon comprenant des fentes latérales opposées (44), étant configuré pour s'emboîter avec le cran d'orifice extérieur, et étant apte à empêcher un déplacement en rotation et un déplacement axial du coupleur par rapport à l'orifice lorsque l'organe de verrouillage est verrouillé mutuellement en rotation avec la nervure pour empêcher que le coupleur ne se déboîte de l'orifice.

2. Le bloc de capteur de la revendication 1, dans lequel l'organe de verrouillage comprend un flasque annulaire destiné au verrouillage mutuel en rotation du coupleur à la nervure.

3. Le bloc de capteur de la revendication 1, dans lequel l'organe de verrouillage comprend une portion de filet destinée au verrouillage mutuel en rotation du coupleur à la nervure.

4. Le bloc de capteur de la revendication 1, dans lequel le coupleur définit une gorge (34) destinée à permettre un accès d'un fluide à l'élément de capteur.

5. Le bloc de capteur de la revendication 1, dans lequel les fentes latérales opposées logent un flasque (46) s'étendant depuis le boîtier de composant pour empêcher un déplacement en rotation du boîtier de verrouillage.

6. Le bloc de capteur de la revendication 1, dans lequel le coupleur comprend un obturateur (42) qui lui est rattaché d'une seule pièce et qui est disposé en emboîtement bout à bout avec le boîtier de verrouillage.

7. Le bloc de capteur de la revendication 1, dans lequel le boîtier de verrouillage comprend un cran de boîtier de verrouillage (54) et le cran de boîtier de verrouillage est configuré pour s'emboîter avec le cran d'orifice extérieur par encliquetage.

8. Le bloc de capteur de la revendication 1, dans lequel l'élément de capteur comprend un capteur de fluide et est en communication électrique avec un contrôleur.

9. Le bloc de capteur de la revendication 1, dans lequel le coupleur définit un siège (30) destiné à loger un joint (32).

10. Le bloc de capteur de la revendication 9, comprenant en outre un joint torique comme joint à l'intérieur du siège.

11. Le bloc de capteur selon l'une des revendications 1 à 10, dans lequel l'orifice comprend une paroi latérale intérieure définissant une nervure, le bloc de capteur comprenant en outre :
un coupleur, le coupleur étant interconnecté avec l'élément de capteur et étant configuré pour être logé par l'orifice.

12. Un système comprenant :
un boîtier de composant (14) définissant dedans un orifice (12), l'orifice comprenant une paroi latérale intérieure définissant une nervure (20) ; et
un bloc de capteur selon l'une des revendications 1 à 11.
